# EUROPÄISCHE PATENTANMELDUNG

(11) **EP 2 198 747 A2**
(43) Veröffentlichungstag der Anmeldung: **23.06.2010**
(21) Anmeldenummer: 09015101.0
(22) Anmeldetag: 05.12.2009
(51) Int. Cl.: A47B 95/00

(54) **Schraubbefestigung für Möbelbeschläge**

(30) Priorität: 11.12.2008 DE 202008016430 U
(71) Anmelder: Lautenschläger, Horst, 64354 Reinheim (DE)
(72) Erfinder: Lautenschläger, Horst, 64354 Reinheim (DE)
(74) Vertreter: Katscher Habermann Patentanwälte

(57) **Zusammenfassung**

Bei einer Schraubbefestigung für Möbelbeschläge zur Verbindung eines Beschlagteils (1) eines Möbelbeschlags mit einer Möbelwand (3), mit einer durch eine Befestigungsbohrung (8) des Beschlagteils (1) in die Möbelwand (3) einschraubbaren Befestigungsschraube (9), wobei eine Basisfläche (1a) des Beschlagteils (1) an der Möbelwand (3) anlegbar ist, verläuft die Bohrungsachse (12) der Befestigungsbohrung (8) in einem Winkel (a) von 30°-60° schräg zur Normalrichtung (13) der Basisfläche (1a) des Beschlagteils (1). Das Beschlagteil (1) weist mindestens zwei entgegengesetzt schräg verlaufende Befestigungsbohrungen (8) auf. Die Bohrungsachsen (12) der beiden Befestigungsbohrungen (8) der durch das Beschlagteil (1) in die Möbelwand (3) einschraubbaren Befestigungsschrauben (9) kreuzen einander oder verlaufen in die Möbelwand (3) hinein divergierend oder konvergierend. Das Beschlagteil (1) weist sich in Normalrichtung (13) zur Basisfläche (1a) zur Möbelwand (3) erstreckende Einsteckdübel (6) auf, die in Einsteckbohrungen (7) der Möbelwand (3) einsteckbar sind. Die Bohrungsachse (12) der Befestigungsbohrung (8) verläuft durch den Einsteckdübel (6) oder schneidet die Achse des Einsteckdübels (6).

## Beschreibung

Die Erfindung betrifft eine Schraubbefestigung für Möbelbeschläge zur Verbindung eines Beschlagteils eines Möbelbeschlags mit einer Möbelwand, mit einer durch eine Befestigungsbohrung des Beschlagteils in die Möbelwand einschraubbaren Befestigungsschraube.

Möbelbeschläge werden üblicherweise mittels Befestigungsschrauben an einer Möbelwand, beispielsweise der Innenwand eines Möbelkorpus und/oder der Innenfläche einer Möbeltür angeschraubt. Hierzu sind am Beschlagteil Befestigungsbohrungen vorgesehen, deren Bohrungsachse senkrecht, das heißt in Normalrichtung, zur Möbelwand verläuft.

Die Belastbarkeit derartiger Schraubbefestigungen hängt - neben der Ausführung des Schraubengewindes, der Materialbeschaffenheit der Möbelwand und dem Schraubendurchmesser - wesentlich von der Einschraubtiefe ab. Die größtmögliche Einschraubtiefe ist durch die Wanddicke der Möbelwand begrenzt. Bei vorgegebener und häufig geringer Wanddicke der das Beschlagteil tragenden Möbelwand ist eine Erhöhung der Befestigungskraft nur dadurch möglich, dass die Anzahl der die Schraubbefestigung bildenden Befestigungsschrauben erhöht wird. Eine Erhöhung der Anzahl der Befestigungsschrauben führt aber nicht nur zu einem erhöhten Platzbedarf des Beschlagteils, sondern insbesondere auch zu einer Vergrößerung des Montageaufwands.

Aufgabe der Erfindung ist es daher, eine Schraubbefestigung der eingangs genannten Gattung so auszugestalten, dass bei vorgegebener Wanddicke der Möbelwand auch ohne Erhöhung der Anzahl der Befestigungsschrauben eine wesentliche Erhöhung der Befestigungskraft erreicht wird.

Diese Aufgabe wird erfindungsgemäß dadurch gelöst, dass die Bohrungsachse der Befestigungsbohrung in einem Winkel von 30°-60° schräg zur Normalrichtung der Basisfläche des Beschlagteils verläuft. Die schräge Anordnung der Befestigungsschraube erlaubt eine Erhöhung der Einschraubtiefe und damit der Schraubenlänge über die Wanddicke der Möbelwand hinaus.

Gemäß einer vorteilhaften Ausgestaltung der Erfindung ist vorgesehen, dass das Beschlagteil mindestens zwei entgegengesetzt schräg verlaufende Befestigungsbohrungen aufweist. Die durch diese beiden Befestigungsbohrungen in die Möbelwand eingeschraubten Befestigungsschrauben bilden eine hochbelastbare Verankerung für das angeschraubte Beschlagteil, insbesondere weil ein größerer Bereich der Möbelwand zur Einleitung der Befestigungskraft herangezogen wird.

Die Ausreißkraft des so befestigten Beschlagteils ist somit wesentlich höher als bei der herkömmlichen senkrechten Schraubbefestigung, weil für den Ausreißvorgang die Zerstörung eines wesentlich größeren Bereichs der Möbelwand erforderlich ist als bei der herkömmlichen Schraubbefestigung. Diese wesentliche Erhöhung der Befestigungskraft wird trotz der Beschränkung auf eine geringe Wanddicke der Möbelwand erreicht.

Weitere vorteilhafte Ausgestaltungen des Erfindungsgedankens sind Gegenstand weiterer Unteransprüche.

Die Erfindung wird nachfolgend an Ausführungsbeispielen näher erläutert, die in der Zeichnung dargestellt sind. Es zeigt:
Figur 1 ein türseitiges Beschlagteil eines Möbelscharniers in einer Draufsicht,
Figur 2 ein Schnitt längs der Linie II-II in Figur 1,
Figur 3 ein korpusseitiges Beschlagteil eines Möbelscharniers in einer Draufsicht,
Figur 4 ein Schnitt längs der Linie IV-IV in Figur 3,
Figur 5 ein Beschlagteil für ein Stützlager für einen Teleskopauszug an Möbeln in einer Draufsicht,
Figur 6 ein Schnitt längs der Linie VI-VI in Figur 5 durch das Stützlager und
Figur 7 ein Schnitt längs der Linie VII-VII in Figur 6.

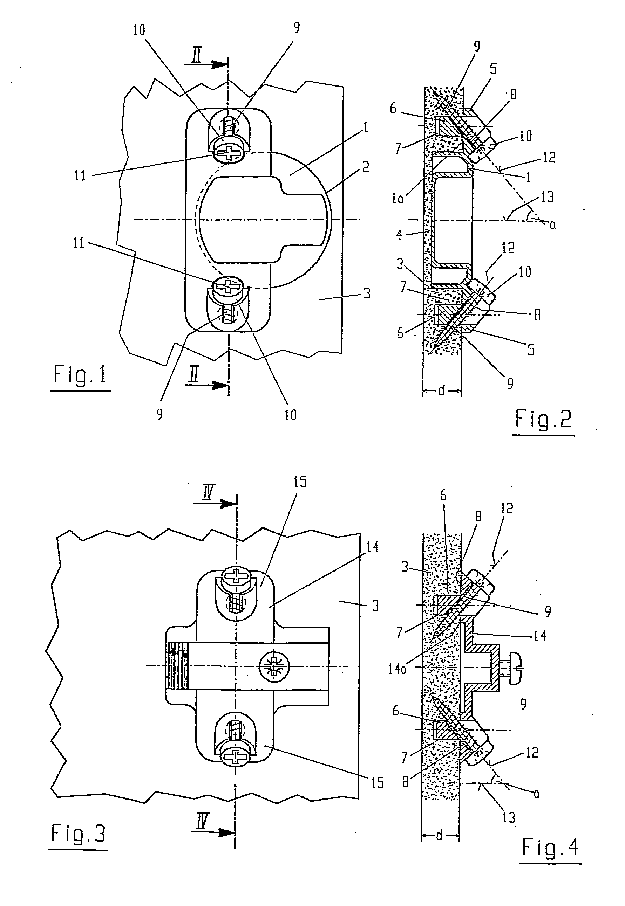

Das in den Figuren 1 und 2 dargestellte Beschlagteil 1 eines Möbelbeschlags, hier eines Möbelscharniers, weist einen in einer Einsteckbohrung 2 einer Möbelwand 3 eingesetzten Einstecktopf 4 auf. An seitlichen Flanschen 5 ist jeweils ein Einsteckdübel 6 angeformt, der jeweils in einer Einsteckbohrung 7 der Möbelwand 3 eingesteckt ist.

Die Einsteckdübel 6 verlaufen in Normalrichtung zur Möbelwand 3, das heißt rechtwinklig zur Ebene der Möbelwand 3.

In jedem seitlichen Flansch 5 des Beschlagteils 1 ist eine Befestigungsbohrung 8 zur Aufnahme jeweils einer Befestigungsschraube 9 ausgebildet. Die Befestigungsschrauben 9 sind bei dem dargestellten Ausführungsbeispiel Spanplattenschrauben mit Flachköpfen 10, die jeweils einen Kreuzschlitz 11 aufweisen.

Die Bohrungsachse 12 jeder Befestigungsbohrung 8 und somit auch die Schraubenachse jeder Befestigungsschraube 9 verläuft bei dem dargestellten Ausführungsbeispiel gemäß Figuren 1 und 2 unter einem Winkel a von 45° zur Normalrichtung 13 einer Basisfläche 1a und somit zu der Ebene der Möbelwand 3 an der die Basisfläche 1a anliegt. Wie man aus den Figuren 1 und 2 erkennt, weist das Beschlagteil 1 zwei entgegengesetzt schräg unter dem Winkel a zur Normalrichtung 13 verlaufende Befestigungsbohrungen 8 auf. Die Bohrungsachsen 12 und damit die Schraubenachsen der beiden durch das Beschlagteil 1 in die Möbelwand 3 eingeschraubten Befestigungsschrauben 9 verlaufen bei diesem Beispiel in die Möbelwand 3 hinein divergierend.

Das in den Figuren 3 und 4 dargestellte Beschlagteil 14, das zur verstellbaren Aufnahme des (nicht dargestellten) Tragarms des schon vorher erwähnten Möbelscharniers dient, weist ebenfalls an zwei seitlichen Flanschen 15 durch Befestigungsbohrungen 8 verlaufenden Befestigungsschrauben 9 auf, deren Bohrungsachsen 12 und Schraubenachsen ebenfalls unter einem Winkel a von 45° zur Normalrichtung 13 der Möbelwand 3 verlaufen, bei der es sich hier beispielsweise um eine Korpuswand eines Möbelstücks handelt. Ebenso wie beim Ausführungsbeispiel nach den Figuren 1 und 2 ist das Beschlagteil 14 mit sich in der normalen Richtung zur Möbelwand 3 erstreckenden Einsteckdübeln 6 versehen, die in Einsteckbohrungen 7 der Möbelwand angeordnet sind.

Die in den Figuren 3 und 4 dargestellte Schraubbefestigung unterscheidet sich von der in den Figuren 1 und 2 gezeigten Schraubbefestigung im Wesentlichen dadurch, dass die Bohrungsachsen 12 der Befestigungsbohrungen 8 und damit zugleich die Schraubenachsen der Befestigungsschrauben 9 der durch das Beschlagteil 14 hindurch in die Möbelwand 3 eingeschraubten Befestigungsschrauben 9 in die Möbelwand 3 hinein konvergierend verlaufen.

Sowohl beim Ausführungsbeispiel nach den Figuren 1 und 2 als auch beim Ausführungsbeispiel nach den Figuren 3 und 4 verlaufen die Bohrungsachsen 12 der Befestigungsbohrungen 8 jeweils durch den Einsteckdübel 6 in der Weise, dass die Bohrungsachse 12 der Befestigungsbohrung 8 die Achse des Einsteckdübels 6 schneidet.

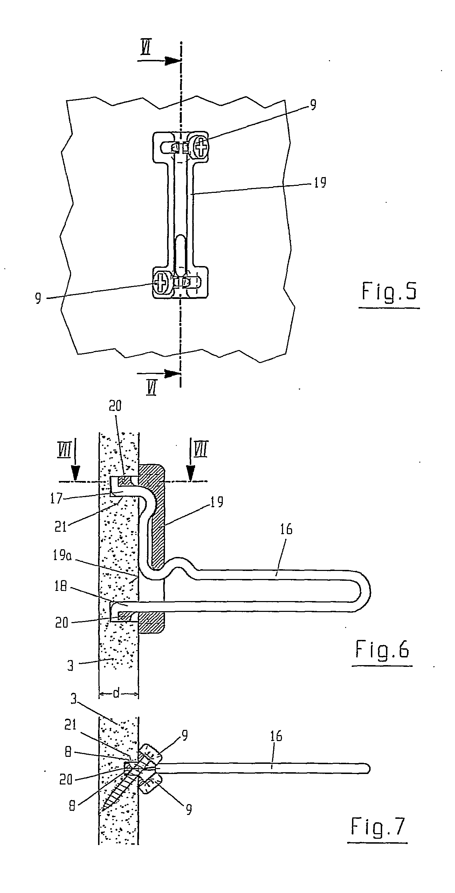

Die Figuren 5 bis 7 zeigen ein Stützlager für das hintere Schienenende eines Teleskopauszugs an Möbeln. Ein metallischer Bügel 16 ist mit seinen beiden Schenkelenden 17, 18 in einem Beschlagteil 19 aufgenommen, an dem zwei Einsteckdübel 20 ausgebildet sind, die in Einsteckbohrungen 21 der Möbelwand 3 aufgenommen sind.

Nahe dem oberen und unteren Ende des Beschlagteils 19 ist in der schon vorher beschriebenen Weise jeweils eine Befestigungsschraube 9 durch eine Befestigungsbohrung 8 des Beschlagteils 19 schräg unter einem Winkel a von 45° gegenüber der Normalrichtung 13 der Möbelwand 3 in die Möbelwand 3 eingeschraubt.

Ebenso wie bei den vorher beschriebenen Ausführungsbeispielen verlaufen die Befestigungsbohrungen 8 durch die Einsteckdübel 20 und kreuzen deren Achsen.

Aus allen dargestellten Ausführungsbeispielen ist zu erkennen, dass die Einschraubtiefe aller Befestigungsschrauben 9 größer ist als die Wanddicke d der Möbelwand 3.

## Patentansprüche

1. Schraubbefestigung für Möbelbeschläge zur Verbindung eines Beschlagteils (1, 14, 19) eines Möbelbeschlags mit einer Möbelwand (3), mit einer durch eine Befestigungsbohrung (8) des Beschlagteils (1, 14, 19) in die Möbelwand (3) einschraubbaren Befestigungsschraube (9), wobei eine Basisfläche (1a, 14a, 19a) des Beschlagteils (1, 14, 19) an der Möbelwand (3) anlegbar ist, **dadurch gekennzeichnet, dass** die Bohrungsachse (12) der Befestigungsbohrung (8) in einem Winkel (a) von 30°-60° schräg zur Normalrichtung (13) der Basisfläche (1a, 14a, 19a) des Beschlagteils (1, 14, 19) verläuft.

2. Schraubbefestigung nach Anspruch 1, **dadurch gekennzeichnet, dass** das Beschlagteil (1, 14, 19) mindestens zwei entgegengesetzt schräg verlaufende Befestigungsbohrungen (8) aufweist.

3. Schraubbefestigung nach Anspruch 2, **dadurch gekennzeichnet, dass** die Bohrungsachsen (12) der beiden Befestigungsbohrungen (8) der durch das Beschlagteil (1) in die Möbelwand (3) einschraubbaren Befestigungsschrauben (9) einander kreuzen.

4. Schraubbefestigungen nach Anspruch 2, **dadurch gekennzeichnet, dass** die beiden Bohrungsachsen (12) für die Möbelwand (3) einschraubbaren Befestigungsschrauben (9) in die Möbelwand (3) hinein divergierend verlaufen.

5. Schraubbefestigung nach Anspruch 2, **dadurch gekennzeichnet, dass** die beiden Bohrungsachsen (12) für die in die Möbelwand (3) einschraubbaren Befestigungsschrauben (9) in die Möbelwand (3) hinein konvergierend verlaufen.

6. Schraubbefestigung nach Anspruch 1, **dadurch gekennzeichnet, dass** das Beschlagteil (1, 14, 19) sich in Normalrichtung (13) zur Basisfläche (1a, 14a, 19a) zur Möbelwand (3) erstreckende Einsteckdübel (6) aufweist, die in Einsteckbohrungen (7) der Möbelwand (3) einsteckbar sind.

7. Schraubbefestigung nach Anspruch 6, **dadurch gekennzeichnet, dass** die Bohrungsachse (12) der Befestigungsbohrung (8) durch den Einsteckdübel (6) verläuft.

8. Schraubbefestigung nach Anspruch 7, **dadurch gekennzeichnet, dass** die Bohrungsachse (12) der Befestigungsbohrung (8) die Achse des Einsteckdübels (6) schneidet.
